# EUROPÄISCHE PATENTANMELDUNG

(11) **EP 4 749 382 A1**
(43) Veröffentlichungstag der Anmeldung: **27.05.2026**
(21) Anmeldenummer: 25215841.5
(22) Anmeldetag: 14.11.2025
(51) Int. Cl.: G05B 19/042, G05B 19/05

(54) **VERFAHREN ZUM BETRIEB EINER ANLAGE, INSBESONDERE EINES PRÜFSTANDES**

(30) Priorität: 20.11.2024 AT 509232024
(71) Anmelder: Hainzl Industriesysteme GmbH, 4021 Linz (AT)
(72) Erfinder: Kovacevic, Timo, 4050 Traun (AT); Maier, Bernhard, 4040 Linz (AT); Winkler, Dominic, 4490 St. Florian (AT); Zufall, Patrick, 4293 Gutau (AT)
(74) Vertreter: Hübscher & Partner Patentanwälte GmbH

(57) **Zusammenfassung**

Es wird ein Verfahren zum Betrieb einer Anlage, insbesondere eines Prüfstandes (1) mit einer zyklusbasierten speicherprogrammierbaren Steuerung (2) beschrieben, wobei je Zyklus (3) ein zyklusunspezifischer Steuercode (4) ausgeführt wird. Um es einem Anwender zu erlauben, den Funktionsumfang der Anlage (1) während der Laufzeit an vorab unbekannte Anforderungen anzupassen, ohne dass die Anlage (1) hierfür stillgelegt werden müsste, wird vorgeschlagen, dass zur Laufzeit der speicherprogrammierbaren Steuerung vor einem vorgegebenen Übergabepunkt (6) ein externer, zyklusspezifischer Steuercode (5) auf die speicherprogrammierbare Steuerung (2) übertragen wird, wonach je Zyklus (3) der Kontrollfluss (7) am Übergabepunkt (6) vom zyklusunspezifischen Steuercode (4) auf den zyklusspezifischen Steuercode (5) und nach der Ausführung des zyklusspezifischen Steuercodes (5) zurück an den zyklusunspezifischen Steuercode (4) übergeben wird.

## Beschreibung

Die Erfindung bezieht sich auf ein Verfahren zum Betrieb einer Anlage, insbesondere eines Prüfstandes mit einer zyklusbasierten speicherprogrammierbaren Steuerung, wobei je Zyklus ein zyklusunspezifischer Steuercode ausgeführt wird.

Zur Steuerung von Anlagen, insbesondere von Hydraulikprüfständen, ist es bekannt, speicherprogrammierbare Steuerungen einzusetzen, die aufgrund ihres zyklischen Verarbeitungstaktes in einfacher Weise Echtzeitanforderungen erfüllen, was gerade bei sicherheitskritischen Steuersystemen von hoher Bedeutung ist. Zur Bedienung der Anlage durch einen Anwender ist in der Regel ein Bedienstand vorgesehen, über den bestehende Abläufe der speicherprogrammierbaren Steuerung aufgerufen werden können. Zur Erweiterung des Funktionsspektrums ist es daher erforderlich, die Programmierung der speicherprogrammierbaren Steuerung zu verändern beziehungsweise neu vorzunehmen, was kosten- und zeitaufwändig ist.

Es wurde daher bereits vorgeschlagen (CN106502190A), die Programmierung einer speicherprogrammierbaren Steuerung für einen Prüfstand ausgehend von einem entfernten Wartungsrechner über ein funkgestütztes Netzwerk vorzunehmen. Nachteilig daran ist allerdings, dass die Änderung des Funktionsumfanges nach wie vor einen Eingriff eines externen Technikers sowie einen wartungsbedingten Ausfall des Prüfstandes erfordert. Darüber hinaus ist der Funktionsumfang von den verfügbaren Ressourcen der speicherprogrammierbaren Steuerung abhängig, sodass insbesondere langandauernde Prüfabläufe mit stark wechselnden oder vorab unbekannten Abläufen mitunter nicht abgebildet werden können.

Der Erfindung liegt somit die Aufgabe zugrunde, ein Verfahren der eingangs beschriebenen Art bereitzustellen, dass es dem Anwender erlaubt, den Funktionsumfang einer Anlage während der Laufzeit an vorab unbekannte Anforderungen anzupassen, ohne dass die Anlage hierfür stillgelegt werden müsste.

Die Erfindung löst die gestellte Aufgabe dadurch, dass zur Laufzeit der speicherprogrammierbaren Steuerung vor einem vorgegebenen Übergabepunkt ein externer, zyklusspezifischer Steuercode auf die speicherprogrammierbare Steuerung übertragen wird, wonach je Zyklus der Kontrollfluss am Übergabepunkt vom zyklusunspezifischen Steuercode auf den zyklusspezifischen Steuercode und nach der Ausführung des zyklusspezifischen Steuercodes zurück an den zyklusunspezifischen Steuercode übergeben wird. Zufolge dieser Maßnahmen kann der zyklusspezifische Steuercode zur Laufzeit der speicherprogrammierbaren Steuerung angepasst werden, ohne dass eine vollständige Neuprogrammierung, das heißt ein Überschreiben sowohl des zyklusunspezifischen als auch des zyklusspezifischen Steuercodes, erforderlich wäre. Somit lassen sich einerseits komplexe und langandauernde Prüfabläufe unabhängig von den Ressourcen der speicherprogrammierbaren Steuerung abbilden und andererseits kann der Funktionsumfang der speicherprogrammierbaren Steuerung und damit der Anlage vom Anwender zur Laufzeit erweitert werden. Der zyklusunspezifische Steuercode kann dabei Funktionen enthalten, die durch den zyklusunspezifischen Steuercode aufgerufen werden können, sodass aufwändige und insbesondere hardwarenahe Steuerroutinen im zyklusunspezifischen Programmcode entfallen können. Der externe, zyklusspezifische Steuercode kann bevorzugt wiederholt zur Laufzeit der speicherprogrammierbaren Steuerung vor einem vorgegebenen Übergabepunkt auf die speicherprogrammierbare Steuerung übertragen werden.

Um die zu übertragene Datenmenge zu reduzieren und eine effiziente Verarbeitung auf der speicherprogrammierbaren Steuerung zu ermöglichen, wird vorgeschlagen, dass der externe, zyklusspezifische Steuercode ein Bytecode ist. Dieser Bytecode kann beispielsweise ein Maschinencode sein, der von der speicherprogrammierbaren Steuerung direkt ausgeführt werden kann.

Um eine aufwändige Adaption des externen, zyklusspezifischen Steuercodes an unterschiedliche speicherprogrammierbare Steuerungen zu vermeiden, kann die speicherprogrammierbare Steuerung einen Interpreter für den zyklusspezifischen Steuercode umfassen. Somit kann ein generischer Steuercode weitgehend hardwareunabhängig an die speicherprogrammierbare Steuerung übertragen werden, in der dieser generische Steuercode zur Laufzeit in hardwarespezifische Anweisungen umgesetzt wird. Diese Umsetzung erfolgt bevorzugt in Echtzeit, dies bedeutet innerhalb einer Zykluszeit der speicherprogrammierbaren Steuerung, insbesondere innerhalb so kurzer Zeit, dass im jeweiligen Zyklus der speicherprogrammierbaren Steuerung alle für diesen Zyklus vorgesehenen Anweisungen abgearbeitet werden können.

Verbesserte Betriebsbedingungen ergeben sich, wenn der externe, zyklusspezifische Steuercode von einer Anpassungseinheit auf die speicherprogrammierbare Steuerung, vorzugsweise in Echtzeit übertragen wird. Dies hat zur Folge, dass der zyklusspezifische Steuercode zur Laufzeit der speicherprogrammierbaren Steuerung in der Anpassungseinheit dynamisch erzeugt werden kann, sodass ein Anwender den Prüfablauf und/oder den Funktionsumfang der speicherprogrammierbaren Steuerung und damit auch der damit gesteuerten Anlage in einfacher Weise anpassen und erweitern kann.

In diesem Zusammenhang kann die Bedienung für den Anwender wesentlich erleichtert werden, indem in der Anpassungseinheit ein zyklusspezifischer Funktionsdatensatz in den zyklusspezifischen Steuercode übersetzt wird. Der zyklusspezifische Funktionsdatensatz kann dabei den gewünschten Prüfablauf und/oder die gewünschte Funktionalität in einer Auszeichnungssprache oder einer Hochsprache abbilden. Bevorzugt kann der Anwender den Funktionsdatensatz vermittels einer graphischen Programmiersprache erstellen oder anpassen. Beispielsweise kann der zyklusspezifische Funktionsdatensatz in einer Auszeichnungssprache, wie beispielsweise der JavaScript Object Notation (JSON) oder der Extensible Markup Language (XML) vorliegen und mit Hilfe einer graphischen Programmierumgebung bearbeitbar sein. Die Anpassungseinheit kann dabei prüfen, ob der vom Anwender erstellte zyklusspezifische Funktionsdatensatz den Anforderungen hinsichtlich einer Ausführbarkeit innerhalb eines Zyklus der speicherprogrammierbaren Steuerung genügt und den zyklusspezifischen Steuercode nur dann erzeugen und an die speicherprogrammierbaren Steuerung übertragen, wenn dies der Fall ist.

Um die Unterstützung unterschiedlicher speicherprogrammierbarer Steuerungen weiter zu vereinfachen und insbesondere die Wartbarkeit der Anpassungseinheit zu verbessern kann der zyklusspezifische Funktionsdatensatz über wenigstens eine Zwischenrepräsentation in den zyklusspezifischen Steuercode übersetzt werden. Dies hat den Vorteil, dass der zyklusspezifische Funktionsdatensatz weiter vom zyklusspezifischen Steuercode entkoppelt wird, sodass der Funktionsdatensatz in einfacher Weise an eine spezifische Programmierumgebung angepasst werden kann, ohne dass die aufwändige Übersetzung in den zyklusspezifischen Steuercode deshalb ebenfalls angepasst werden müsste. Die Zwischenrepräsentation kann beispielsweise einzelne Operationen in einer abstrakten Definition umfassen, die dann in weiterer Folge in den zyklusspezifischen Steuercode übersetzt werden kann.

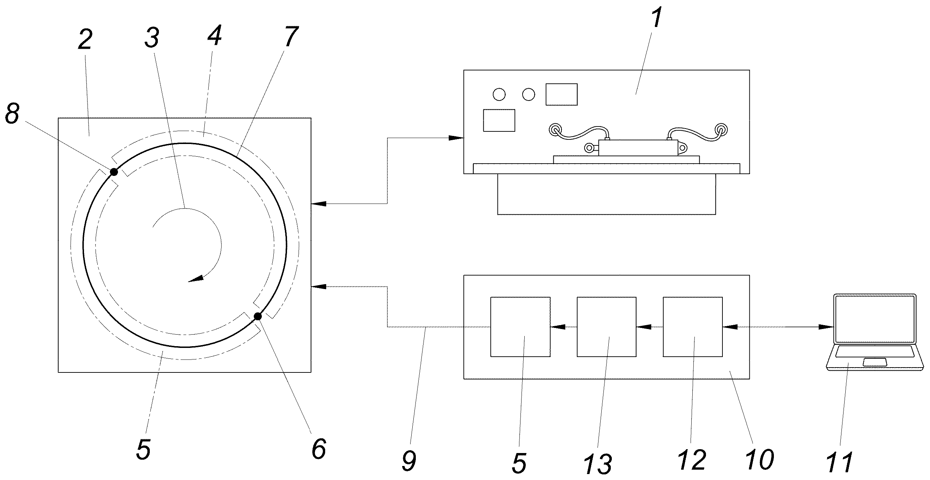

In der Zeichnung ist der Erfindungsgegenstand beispielsweise dargestellt, und zwar in einem schematischen Blockschaltbild.

Ein erfindungsgemäßes Verfahren bezieht sich auf den Betrieb einer Anlage 1, vorzugsweise eines Hydraulikprüfstandes, mit einer zyklusbasierten speicherprogrammierbaren Steuerung 2. Diese speicherprogrammierbare Steuerung 2 führt je Zyklus 3 einen zyklusunspezifischen Steuercode 4 und einen zyklusspezifischen Steuercode 5 aus. An einem Übergabepunkt 6 wird dabei der Kontrollfluss 7 vom zyklusunspezifischen Steuercode 4 an den zyklusspezifischen Steuercode 5 übergeben, nach dessen Ausführung der Kontrollfluss 7 wiederum am Rücksprungpunkt 8 an den zyklusunspezifischen Steuercode 4 übergeben wird. Innerhalb eines Zyklus 7 können sich zyklusunspezifischer Steuercode 4 und zyklusspezifischer Steuercode 5 auch mehrfach abwechseln.

Der zyklusspezifische Steuercode 5 wird vorzugsweise über eine echtzeitfähige Schnittstelle 9 an die speicherprogrammierbare Steuerung 2 übertragen, die in einer bevorzugten Ausführungsform einen nicht näher dargestellten Interpreter zur Ausführung dieses zyklusspezifischen Steuercodes 5 umfasst, der insbesondere als Bytecode vorliegen kann.

Zur Übertragung des zyklusspezifischen Steuercodes 5 über die echtzeitfähige Schnittstelle 9 an die speicherprogrammierbare Steuerung 2 ist eine Anpassungseinheit 10 vorgesehen, die eine schematisch angedeutete Bedienungsschnittstelle 11 aufweisen oder mit einer solchen verbunden sein kann. Über diese Bedienungsschnittstelle 11 kann ein Anwender einen zyklusspezifischen Funktionsdatensatz 12 vermittels einer graphischen Programmiersprache erstellen oder anpassen. Beispielsweise kann der zyklusspezifische Funktionsdatensatz 12 in einer Auszeichnungssprache, wie beispielsweise der JavaScript Object Notation (JSON) oder der Extensible Markup Language (XML) vorliegen. In der Anpassungseinheit 10 wird dieser zyklusspezifische Funktionsdatensatz 12 in eine Zwischenrepräsentation 13 übersetzt. Die Zwischenrepräsentation 13 kann beispielsweise einzelne Operationen in einer abstrakten Definition umfassen, die dann in weiterer Folge in den zyklusspezifischen Steuercode 5 übersetzt und über die Schnittstelle 9 an die speicherprogrammierbare Steuerung 2 übertragen werden kann, wo in jedem Zyklus 3 der zuletzt übertragene zyklusspezifische Steuercode 5 vom Übergabepunkt 6 zum Rücksprungpunkt 8 zur Steuerung der Anlage 1 ausgeführt wird.

## Patentansprüche

1. Verfahren zum Betrieb einer Anlage, insbesondere eines Prüfstandes (1) mit einer zyklusbasierten speicherprogrammierbaren Steuerung (2), wobei je Zyklus (3) ein zyklusunspezifischer Steuercode (4) ausgeführt wird, **dadurch gekennzeichnet, dass** zur Laufzeit der speicherprogrammierbaren Steuerung vor einem vorgegebenen Übergabepunkt (6) ein externer, zyklusspezifischer Steuercode (5) auf die speicherprogrammierbare Steuerung (2) übertragen wird, wonach je Zyklus (3) der Kontrollfluss (7) am Übergabepunkt (6) vom zyklusunspezifischen Steuercode (4) auf den zyklusspezifischen Steuercode (5) und nach der Ausführung des zyklusspezifischen Steuercodes (5) zurück an den zyklusunspezifischen Steuercode (4) übergeben wird.

2. Verfahren nach Anspruch 1, **dadurch gekennzeichnet, dass** der externe, zyklusspezifische Steuercode (5) ein Bytecode ist.

3. Verfahren nach Anspruch 1 oder 2, **dadurch gekennzeichnet, dass** die speicherprogrammierbare Steuerung (2) einen Interpreter für den zyklusspezifischen Steuercode (5) umfasst.

4. Verfahren nach einem der Ansprüche 1 bis 3, **dadurch gekennzeichnet, dass** der externe, zyklusspezifische Steuercode (5) von einer Anpassungseinheit (10) auf die speicherprogrammierbare Steuerung (2) übertragen wird.

5. Verfahren nach Anspruch 4, **dadurch gekennzeichnet, dass** in der Anpassungseinheit (10) ein zyklusspezifischer Funktionsdatensatz (12) in den zyklusspezifischen Steuercode (5) übersetzt wird.

6. Verfahren nach Anspruch 5, **dadurch gekennzeichnet, dass** der zyklusspezifische Funktionsdatensatz (12) über wenigstens eine Zwischenrepräsentation (13) in den zyklusspezifischen Steuercode (5) übersetzt wird.
